(19) **Europäisches Patentamt**
**European Patent Office**
**Office européen des brevets**

(11) **EP 1 923 662 B1**

(12) **FASCICULE DE BREVET EUROPEEN**

(45) Date de publication et mention
de la délivrance du brevet:
**15.05.2019 Bulletin 2019/20**

(51) Int Cl.:
***G01B 7/287*** *(2006.01)*       ***G01B 21/32*** *(2006.01)*
***G01B 5/207*** *(2006.01)*

(21) Numéro de dépôt: **07116175.6**

(22) Date de dépôt: **12.09.2007**

(54) **Procédé et dispositif d'acquisition d'une forme géométrique déformable**

Verfahren und Vorrichtung zur Erfassung einer verformbaren geometrischen Form

Method and device for acquiring a deformable geometric shape

(84) Etats contractants désignés:
**DE FR GB IT**

(30) Priorité: **14.09.2006 FR 0653742**

(43) Date de publication de la demande:
**21.05.2008 Bulletin 2008/21**

(73) Titulaire: **Commissariat à l'Énergie Atomique
et aux Énergies Alternatives
75015 Paris (FR)**

(72) Inventeurs:
• **David, Dominique
38640, Claix (FR)**

• **Blanpain, Roland
38380, Entre-deux-Guiers (FR)**

(74) Mandataire: **Ahner, Philippe et al
BREVALEX
95, rue d'Amsterdam
75378 Paris Cedex 8 (FR)**

(56) Documents cités:
**EP-A1- 0 968 400       WO-A1-2005/061282
JP-A- 2006 153 668    US-A- 3 818 756
US-A- 4 534 813        US-A- 5 054 496
US-A- 6 127 672        US-B1- 6 640 202**

**Description**

Domaine technique et art antérieur

La présente invention concerne un procédé et un dispositif d'acquisition d'une forme géométrique déformable. La forme géométrique déformable peut être une ligne ou une surface plane et, plus généralement, une surface gauche (« *warped surface* » en anglais).

La forme géométrique déformable est dessinée par une matière déformable, la déformation de la forme géométrique résultant des déformations de la matière déformable.

L'invention concerne plus particulièrement une acquisition tridimensionnelle ou acquisition 3D de formes géométriques déformables.

Elle s'applique notamment :

- aux domaines de l'usinage, de la menuiserie, de la maçonnerie, du bâtiment et de la fabrication de biens de consommation courante,
- au contrôle de formes,
- à l'acquisition de formes gauches, telles que les carrosseries d'automobile par exemple, et
- à l'étude de flux laminaires, dans le cadre d'études d'aérodynamique ou d'hydrodynamique, par suivi temporel de capteurs appropriés, flottant dans un gaz ou un liquide en mouvement.

L'invention est un perfectionnement d'une invention précédente qui a fait l'objet du dépôt d'une demande de brevet français intitulée « Procédé et dispositif d'acquisition d'une forme géométrique », déposée par la Demanderesse sous le numéro d'enregistrement national 0550620 le 9 mars 2005.

Selon l'art antérieur, une technique d'acquisition 3D connue utilise une triangulation par laser. Cette technique est coûteuse et nécessite des algorithmes de reconstruction qui sont difficiles à maîtriser. Par ailleurs, elle présente l'inconvénient de conduire à la génération de parties cachées des objets auxquels elle est appliquée.

Une autre technique connue d'acquisition 3D utilise le mouvement d'une ou de plusieurs caméras vidéo pour faire des enregistrements stéréoscopiques des objets étudiés. Cette autre technique est généralement coûteuse et complexe.

De plus, dans les deux cas, un équipement extérieur à l'objet étudié est nécessaire.

La demande de brevet français intitulée « Procédé et dispositif d'acquisition d'une forme géométrique » concerne une technique d'acquisition plus simple, moins coûteuse et plus facile à mettre en oeuvre que les techniques connues mentionnées ci-dessus. Une description en est faite ci-dessous. Pour des raisons de simplification de l'exposé, dans la suite de la description, la technique d'acquisition qui est l'objet de la demande de brevet français intitulée « Procédé et dispositif d'acquisition d'une forme géométrique » sera nommée « technique d'acquisition de base » en tant que technique sur la base de laquelle l'invention de la présente demande de brevet est construite.

La technique d'acquisition de base s'applique aussi bien à un objet rigide qu'à un objet souple, par exemple un vêtement. Dans ce dernier cas, la technique d'acquisition de base permet aussi de décrire les variations de la forme de l'objet en fonction du temps.

La technique d'acquisition de base est applicable en situation réelle. Il est alors possible, par exemple, d'analyser en situation réelle le comportement de traînée d'une voiture ou d'une aile d'avion.

Selon un aspect particulier de la technique d'acquisition de base, on utilise des capteurs angulaires (« *angular sensors* » en anglais), répartis sur une courbe ou une surface apte à épouser la forme à déterminer. Par un procédé de traitement du signal, on détermine les coordonnées de chacun des points en lesquels se situent les capteurs. On peut ainsi en déduire la répartition spatiale des points qui constituent la forme étudiée.

Il convient en outre de noter que l'on peut théoriquement utiliser des techniques classiques pour fabriquer des capteurs permettant la mise en oeuvre de la technique d'acquisition de base. Cependant, seules les microtechnologies ou les nanotechnologies sont susceptibles de permettre le développement de cette technique.

En effet, les microtechnologies ou les nanotechnologies autorisent de pouvoir recourir à des capteurs dont le poids est négligeable devant le poids des dispositifs dont les courbes et/ou surfaces sont à déterminer. Ainsi un matériau quelconque peut-il être transformé pour mettre en oeuvre la technique d'acquisition de base sans que les caractéristiques mécaniques initiales du matériau en soient sensiblement affectées.

En outre, les microtechnologies ou les nanotechnologies permettent de recourir à un nombre important de points de mesure dans le matériau, à savoir, des centaines et même des milliers de points, ou plus, ce qui permet d'élargir le champ des applications de la technique d'acquisition de base.

De façon précise, la technique de base a pour objet un procédé d'acquisition d'une forme géométrique, à savoir une courbe ou une surface, par détermination des coordonnées des points de cette courbe ou de cette surface, ce procédé étant caractérisé en ce que :

- on place sur cette forme un ensemble de capteurs, chaque capteur étant prévu pour fournir des signaux représentatifs de l'orientation de la courbe ou de la surface à l'emplacement de ce capteur,
- on choisit un modèle de la courbe ou de la surface,
- à partir des signaux, on détermine les paramètres du modèle, et
- à partir de ces paramètres, on détermine la répartition spatiale des points de la forme géométrique.

Selon un premier mode de réalisation de la technique d'acquisition de base, les capteurs sont fixés à un support fait d'une matière solide et déformable, apte à épouser la forme à acquérir. Ce support peut former une ligne ou une surface.

Selon une variante du premier mode de réalisation de la technique de base, le support est souple. Dans ce cas, si la forme à acquérir présente une ou plusieurs fréquences spatiales maximales et si le nombre de capteurs est au moins égal, par unité de longueur ou de surface, à deux fois la valeur de la fréquence maximale, alors on peut échantillonner localement la courbe ou la surface grâce aux capteurs.

Selon un deuxième mode de réalisation de la technique d'acquisition de base, les capteurs sont mécaniquement indépendants les uns des autres et on reconstruit de proche en proche la forme à acquérir, à partir des signaux fournis par les capteurs. C'est le cas, par exemple, où les différents capteurs ne sont pas sur un même support.

Dans la technique d'acquisition de base, on peut acquérir la forme d'une courbe ou d'une surface qui délimite un objet solide. Avantageusement, dans le cas de l'utilisation d'un support fait de matière solide et déformable, on peut également acquérir la forme intrinsèque du support déformable.

Dans la technique de base, chaque capteur peut être en outre prévu pour déterminer la distance qui le sépare des capteurs voisins, et on reconstruit alors, de proche en proche, la forme à acquérir.

Un dispositif d'acquisition d'une forme géométrique de la technique d'acquisition de base comprend :

- un ensemble de capteurs, chaque capteur étant prévu pour fournir des signaux représentatifs de l'orientation de la courbe ou de la surface à l'emplacement de ce capteur, et
- des moyens électroniques de traitement des signaux fournis par les capteurs, ces moyens étant prévus pour déterminer, à partir d'un modèle de la courbe ou de la surface, les paramètres du modèle et pour déterminer, à partir de ces coordonnées, la répartition spatiale des points de la forme géométrique.

Selon un premier mode de réalisation du dispositif de la technique d'acquisition de base, les capteurs sont fixés à un support fait d'une matière solide et déformable, apte à épouser la forme à acquérir.

Selon un deuxième mode de réalisation du dispositif de la technique d'acquisition de base, les capteurs sont mécaniquement indépendants les uns des autres.

Les capteurs peuvent être choisis parmi les accéléromètres, les magnétomètres et les capteurs de force ou de pression.

La technique d'acquisition de base sera mieux comprise à la lecture de la description d'exemples de réalisation donnés ci-après, en faisant référence aux figures annexées 1A, 1B, 2, 3 et 4, parmi lesquelles :

- la figure 1A est une vue schématique d'un exemple de dispositif d'acquisition de courbe conforme à la technique d'acquisition de base,
- la figure 1B est une vue schématique d'un exemple de dispositif d'acquisition de surface conforme à la technique d'acquisition de base,
- la figure 2 est une vue schématique d'un dispositif d'acquisition de courbe sous la forme d'un support filaire sans rigidité équipé de capteurs conforme à la technique d'acquisition de base,
- la figure 3 est une vue schématique d'un dispositif d'acquisition de courbe dans lequel chaque portion de courbe comprise entre deux capteurs est assimilée à un segment de droite, et
- la figure 4 est une vue schématique d'un support rigide que l'on peut utiliser dans la technique d'acquisition de base.

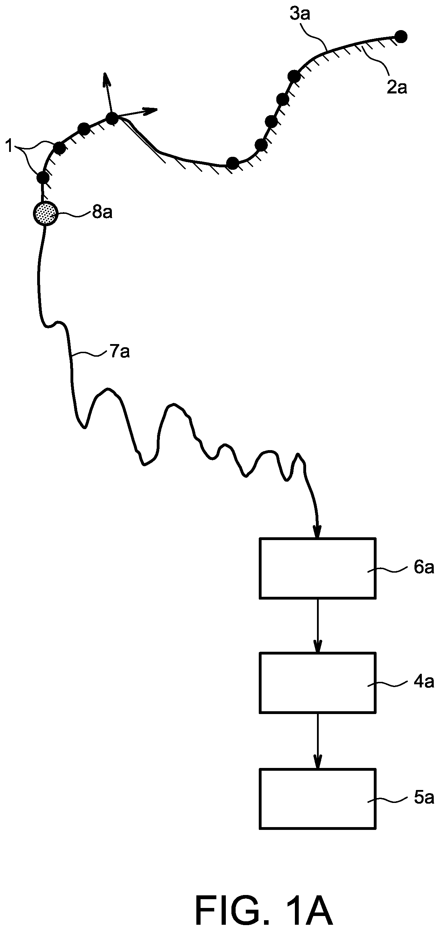

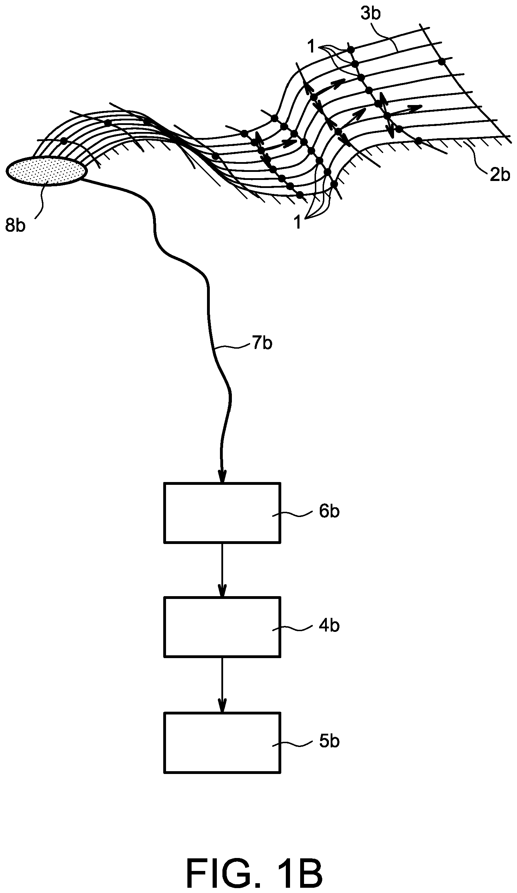

Les figures 1A et 1B sont des vues schématiques de modes de réalisation particuliers du dispositif d'acquisition de forme géométrique de la technique d'acquisition de base.

Les dispositifs des figures 1A et 1B comprennent un ensemble de capteurs 1 qui sont placés, respectivement, sur la courbe délimitant l'objet 2a (cf. figure 1A) et sur la surface délimitant l'objet 2b (cf. figure 1B). Chaque capteur 1 est prévu pour fournir des signaux électriques représentatifs de l'orientation de cette courbe ou de cette surface, à l'emplacement du capteur considéré.

Les capteurs 1 sont, par exemple, des accéléromètres ou des magnétomètres qui sont fixés sur un support 3a (cf. figure 1A) ou 3b (cf. figure 1B), lequel support est fait d'une matière solide susceptible d'épouser la forme que l'on veut acquérir.

Dans l'exemple de la figure 1A, le support 3a est une ligne tandis que, dans l'exemple de la figure 1B, le support 3b est une surface.

Le dispositif de la figure 1A ou 1B comprend en outre des moyens électroniques de traitement 4a ou 4b, prévus pour traiter les signaux fournis par les capteurs 1, pour déterminer les coordonnées de chacun des points en lesquels se trouvent ces capteurs et pour déterminer aussi, à partir de ces coordonnées, la répartition spatiale des points de la courbe 2a ou de la surface 2b.

Sur la figure 1A ou 1B, on voit en outre des moyens d'affichage 5a ou 5b, permettant l'affichage des résultats des calculs effectués par les moyens électroniques de traitement 4a ou 4b.

On voit aussi des moyens d'acquisition 6a ou 6b, permettant l'acquisition des mesures effectuées au moyen des capteurs 1. Les mesures acquises par les moyens 6a ou 6b sont transmises aux moyens électroniques de traitement 4a ou 4b.

Les capteurs 1 sont reliés aux moyens d'acquisition 6a ou 6b par l'intermédiaire de liaisons filaires ou sans fil 7a ou 7b.

Sur les figures 1A et 1B, les références respectives 8a et 8b représentent une électronique embarquée (de façon facultative) sur le support et qui sert à collecter les informations en provenance des capteurs et à transmettre celles-ci (éventuellement sans fil) aux moyens d'acquisition de mesures respectifs 6a et 6b. Le support est fait d'une matière suffisamment flexible pour épouser la forme mesurée. Comme on l'a vu, le support peut s'étendre suivant une ligne ou une surface. Dans les deux cas, le support peut être totalement libre. Ce peut être, par exemple, une simple ficelle. Au contraire, ce support peut présenter des propriétés de flexibilité particulières (par exemple une courbure maximale autorisée ou une élasticité contrôlée) ou des propriétés intermédiaires entre le cas d'un support totalement libre et le cas d'un support ayant une flexibilité particulière. A titre d'exemple, on peut citer les règles souples qui sont utilisées par les architectes en tant que supports ayant de telles propriétés intermédiaires.

Les capteurs qui sont disposés sur le support sont capables de restituer une information géométrique.

A titre d'exemple, on peut utiliser de simples accéléromètres qui sont capables de restituer, chacun, une inclinaison par rapport à la direction verticale. On peut aussi utiliser des accéléromètres bi-axes ou tri-axes qui restituent chacun, respectivement, deux ou trois inclinaisons par rapport à la direction verticale. On peut aussi utiliser des magnétomètres qui restituent, chacun, une inclinaison par rapport à la direction du champ magnétique terrestre.

Selon la technique d'acquisition de base, on peut aussi utiliser des capteurs tels que chacun d'entre eux soit non seulement capable de restituer une information géométrique mais encore de déterminer la distance qui le sépare des capteurs constituant ses plus proches voisins. A titre d'exemple, de tels capteurs peuvent être constitués par des microsystèmes radiofréquences établissant la distance qui les sépare par un procédé classique de triangulation ou de mesure de temps de vol. Il peut s'agir également de capteurs de contraintes qui sont sensibles à l'élongation du matériau (jauge de contrainte, déplacement de micro-aimant devant des microcapteurs magnétiques, etc.).

Enfin, on peut également utiliser des capteurs de force, éventuellement tridimensionnels, ou des microjauges de contrainte déposées au sein du matériau. La flexion du matériau crée des efforts locaux qui sont mesurés par ces capteurs.

Comme cela a été mentionné précédemment, les capteurs sont électriquement reliés à des moyens d'acquisition électronique. Il peut être commode d'utiliser un bus-série entre tout ou partie des capteurs, de façon à limiter le nombre de fils requis pour collecter les informations. De plus, les moyens de traitement, qui sont reliés à ces moyens d'acquisition, sont typiquement un ordinateur tel qu'un ordinateur personnel (PC).

Un dispositif conforme à la technique de base peut être utilisé pour acquérir :

(a) la forme d'une courbe ou d'une surface donnée, par exemple le gabarit d'une découpe gauche ou la surface d'un meuble, ou
(b) la forme intrinsèque de la matière dont est constitué le support, par exemple dans le cas où l'on souhaite déterminer la manière dont un textile tombe.

Les procédés conformes à la technique de base qui sont décrits ci-après sont valables dans le premier cas (a). En revanche, ils ne sont valables dans le deuxième cas (b) que si le poids des capteurs et la rigidité éventuelle du réseau de capteurs (laquelle rigidité est due à l'interconnexion entre les capteurs) ne modifient pas le comportement intrinsèque de la matière du support. Cela est rendu possible par l'utilisation des microtechnologies et des nanotechnologies.

On peut également envisager un autre dispositif conforme à la technique d'acquisition de base dans lequel les capteurs ont des poids non négligeables par rapport au poids de leur support. Cependant, dans ce dernier cas, le procédé de reconstruction de la forme du support est beaucoup plus complexe.

Avantageusement, de façon générale, la miniaturisation mise en oeuvre dans la technique d'acquisition de base va au-delà d'un simple facteur d'échelle et apporte une faisabilité nouvelle.

Comme on l'a vu, pour la mise en oeuvre d'un procédé conforme à la technique de base, on place le support au contact d'un objet que l'on veut mesurer. Plusieurs cas se présentent.

1er cas : Support sans rigidité (par exemple du genre ficelle).

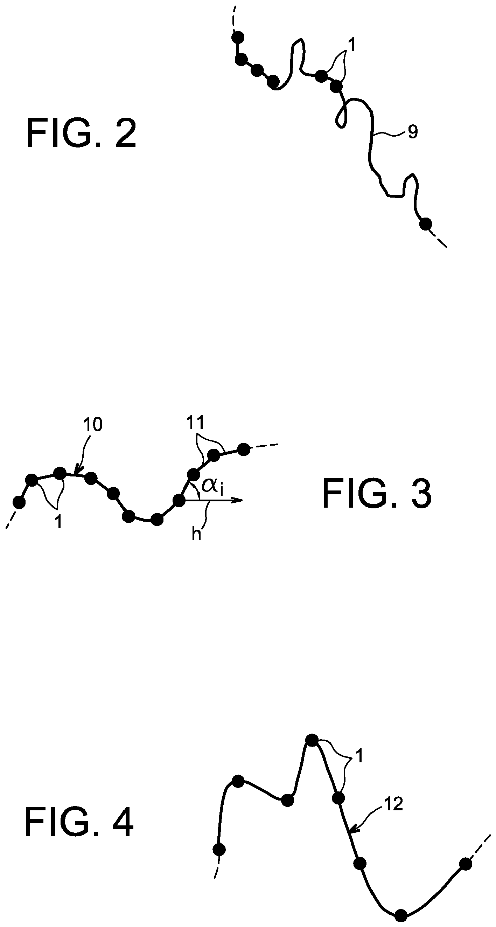

Ce cas est schématiquement illustré par la figure 2 où l'on voit un tel support 9, du genre d'une ficelle, et formant donc une ligne ou, plus précisément, une courbe gauche. Des capteurs 1 sont fixés sur ce support, le long de ce dernier.

Un support sans rigidité est adapté à l'acquisition de la forme d'un matériau tel qu'un textile par exemple. On peut mesurer ainsi, par exemple, les déformations d'un tissu ou la manière dont ce tissu tombe. Les capteurs sont fixés au textile de façon que les distances respectives entre les capteurs soient connues, à l'état dit de repos, c'est-à-dire lorsque le textile est entièrement étiré et présente donc des parties planes. Deux sous-cas se présentent alors.

1a) Le nombre de capteurs est suffisamment grand pour que les données fournies par les capteurs procurent un échantillonnage local de la surface que l'on veut analyser. Par exemple, un ensemble d'accéléromètres et de magnétomètres permettent alors d'acquérir les tangentes locales à la surface du textile étudié.

Par application du théorème de Shannon, on peut déduire le nombre de capteurs, nécessaires pour analyser une courbe ou une surface donnée, de l'analyse des fréquences spatiales présentes dans la courbe ou la surface. Le nombre de capteurs sera au moins égal à deux fois la valeur de la fréquence maximale.

Si les capteurs sont beaucoup plus nombreux que les courbures que l'on veut analyser, on se trouve dans une situation de sur-échantillonnage. Dans ce cas, le procédé permettant de retrouver la courbe ou la surface acquise est le suivant.

On assimile chaque portion entourant un capteur à un segment de droite (dans le cas d'un support en forme de ligne) ou à une portion de plan (dans le cas d'un support formant une surface). La reconstruction se fait par la juxtaposition successive de tous les segments ou toutes les portions élémentaires, chaque segment ou portion étant orienté en fonction de la valeur fournie par le capteur porté par ce segment ou cette portion.

A ce sujet, on se reportera à la figure 3 qui est relative à la reconstruction par des éléments rectilignes. On y voit un support formant une ligne 10. On voit également les capteurs 1 fixés à ce support 10. Entre les capteurs, le support est assimilé à des segments de droite 11. On a également représenté l'angle $\alpha_i$ fait par le i$^{ème}$ de ces segments 11 avec une direction horizontale h, ce segment étant tangent à la forme étudiée, au point où se trouve l'un des deux capteurs qui délimitent ce segment.

1b) Les capteurs sont en nombre « limité », proche de deux fois la valeur de la fréquence maximale.

Dans ce cas, le procédé conforme à la technique de base consiste à attribuer un modèle particulier qui n'est plus localement linéaire comme dans le cas 1a) mais plus élaboré.

On modélise par exemple la courbe par une formulation analytique, par exemple par une courbe de Béziers à deux ou trois dimensions ou encore par une B-spline à deux ou trois dimensions. Quant à la surface, elle peut être modélisée par un polynôme du type f(x,y,z)=0 ou par une surface de Béziers.

Dans le cas où les capteurs fournissent des signaux représentatifs des angles localement mesurés sur la courbe ou la surface étudiée, on associe les mesures ainsi obtenues à la formulation analytique de ces mêmes angles locaux, formulation qui est déduite du modèle choisi.

La résolution du système d'équations ainsi obtenu fournit une estimation des paramètres du modèle. Dans ce cas, il convient de noter que les surfaces et les courbes que l'on mesure doivent satisfaire des critères de courbures, ou de fréquences spatiales, qui sont compatibles avec le nombre de capteurs du dispositif conforme à la technique de base que l'on utilise. A ce sujet, on se reportera au paragraphe la ci-dessus.

A titre purement indicatif et nullement limitatif, on donne ci-après un exemple de procédé de calcul d'une surface acquise, dans le cas d'un calcul direct.

Soit z=f(x,y) l'équation de la surface recherchée. On note Pi1, Pi2... les mesures des capteurs au point Mi. On note aussi ACi l'abscisse curviligne connue du point Mi.

Les capteurs fournissent par exemple les valeurs des inclinaisons du plan tangent local en Mi par rapport à la direction verticale et au champ magnétique terrestre, ces capteurs étant des accéléromètres et des magnétomètres dans l'exemple considéré. Ces valeurs sont converties en des tangentes locales à la surface recherchée.

Cette surface recherchée est déterminée en résolvant le système des trois équations suivantes :

- Pi1=df(xi,yi)/dxi
- Pi2=df(xi,yi)/dyi
- Abscisse curviligne au point (xi,yi)=ACi.

Dans ce système d'équations, Pi1 et Pi2 correspondent aux tangentes et ACi correspond à la position relative des capteurs avant la déformation de la surface étudiée.

A titre purement indicatif et nullement limitatif, on donne ci-après un autre exemple de procédé conforme à la technique de base, pour le calcul d'une surface acquise, dans le cas d'un calcul inverse.

Ce calcul nécessite plusieurs étapes, à savoir :

- Etape 1 : on fait une hypothèse sur un paramètre **q,** ce qui se traduit par l'équation suivante :
  Z=f(x, y ,**q0**) où **q0** est le vecteur de paramètres initial qui définit la représentation initiale de la courbe.
- Etape 2 : au moyen de cette équation, on détermine les mesures estimées Ri des valeurs des tangentes locales, par exemple :

$$\texttt{Ri1=df(xi, yi, \textbf{q0})/dx (calcul des tangentes}$$

$$\texttt{localement).}$$

- Etape 3 : on détermine également les mesures estimées Ei des sorties des capteurs angulaires supposés situés aux points (xi, yi).
- Etape 4 : au moyen des résultats obtenus dans les étapes 2 et 3, on calcule la distance entre les sorties réelles des capteurs Pi et leurs valeurs estimées Ei.
- Etape 5 : si la distance calculée est inférieure à un seuil prédéfini, par exemple égal à 1% de la valeur mesurée par les capteurs, on affiche le résultat.
- Etape 6 : si cette distance est supérieure ou égale à ce seuil prédéfini, on met à jour par des méthodes classiques (par exemple une méthode de descente de gradient) le vecteur **q0** en le remplaçant par un nouveau vecteur **q1,** qui est le vecteur des paramètres de la courbe ou de la surface à la première itération, et l'on recommence la deuxième étape avec ce nouveau vecteur.

$2^{ème}$ cas Le support est rigide.

Ce cas est illustré, à titre d'exemple non limitatif, par la figure 4 qui représente un support qui épouse la forme d'une ligne 12 et qui porte des capteurs 1, la longueur des intervalles entre les capteurs étant liée à la courbure maximale mesurable et dépendant des propriétés de rigidité du matériau précontraint dont le support est constitué. Un tel support présente des propriétés de courbure intrinsèque. Il peut s'agir, par exemple, d'un rouleau de négatifs photographiques.
Dans ce cas, le procédé est analogue au procédé que l'on a expliqué dans le paragraphe 1b ci-dessus.
Toutefois, dans ce deuxième cas, on peut alors choisir, de préférence, un modèle mathématique rendant compte des propriétés intrinsèques de la matière utilisée pour le support.
La technique d'acquisition de base présente alors deux avantages. D'une part, on peut alors limiter le nombre de capteurs requis, éventuellement jusqu'à une limite optimale en adéquation avec le modèle géométrique de la matière. D'autre part, la manipulation du dispositif conforme à la technique d'acquisition de base est alors rendue plus facile par les propriétés de rigidité du support.

$3^{ème}$ cas chaque point de mesure dispose de moyens pour mesurer la distance à ses plus proches voisins.

Dans ce troisième cas, le procédé de reconstruction est en réalité plus simple puisque, à partir de l'un des points de mesure, on peut reconstruire de proche en proche l'ensemble de la forme recherchée, en s'appuyant sur les informations angulaires et les informations de distance.
Il faut être capable, en première approximation, de disposer du vecteur complet de translation entre deux points de mesures et donc de disposer de trois grandeurs entre ces deux points. En général, on mesure plutôt l'orientation du vecteur (de 1 à 3 degrés de liberté) et la norme de ce vecteur.

$4^{ème}$ cas : le support physique des capteurs est supprimé.

Les capteurs sont alors mécaniquement indépendants les uns des autres. Dans ce cas, on place les points de mesure en divers points d'une surface que l'on veut acquérir. Une telle surface peut être, par exemple, la surface du toit d'une maison ou d'un monument.
Puis on reconstruit de proche en proche la surface à partir des mesures, comme on l'a indiqué au paragraphe 3 ci-dessus.
De plus, des informations a priori sur la surface acquise (par exemple le fait que la surface soit constituée seulement de segments plans ou encore que la courbure maximale de cette surface soit égale à une valeur connue) permettent de limiter le nombre de points de mesure et de reconstruire l'ensemble des données, le recours aux informations connues a priori se traduisant par des techniques d'interpolation (utilisant par exemple un polynôme de degré donné ou une courbe décomposable en portions linéaires).
On donne ci-après divers avantages de la technique d'acquisition de base :

- elle conduit à un système d'acquisition de donnée en trois dimensions, qui est maniable et facile à utiliser ;

- elle permet d'utiliser des capteurs classiques, peu coûteux, qui permettent la réalisation d'un dispositif conforme à l'invention de coût réduit ;
- elle est compatible avec des mesures portant sur des matériaux légers tels que les textiles et les papiers et peut donc être appliquée à de telles matières ;
- le dispositif objet de la technique d'acquisition de base peut être soit intégré à un matériau de prime abord, soit rapporté sur un matériau déjà existant ;
- le dispositif objet de la technique d'acquisition de base présente une échelonnabilité (en anglais, *scalability*) lui permettant de s'adapter à des applications de tailles variées ;
- il est possible de suivre les variations de la forme d'une courbe ou d'une surface en fonction du temps.

A titre purement indicatif et nullement limitatif, on donne ci-après un autre exemple de l'invention.

Sur la périphérie d'une roue (non représentée) située dans un plan vertical, on place un dispositif conforme à la technique d'acquisition de base (support en forme de ligne), dont la longueur est au moins égale au périmètre de cette roue.

Les capteurs utilisés sont des accéléromètres et sont placés régulièrement sur le dispositif, à une distance d les uns des autres. L'angle mesuré par chaque point de mesure correspond à une inclinaison par rapport à une direction verticale, inclinaison qui varie d'un point au suivant de $A\alpha = d/R$, R étant le rayon de la roue.

Mais un tel dispositif mesure aussi bien une déformation locale, par exemple une portion plane d'un pneu dégonflé, cette portion étant en contact avec le sol.

A titre purement indicatif et nullement limitatif, on donne encore ci-après un autre exemple de la technique d'acquisition de base.

On utilise un support constitué par un circuit imprimé souple tel qu'un « flex ». Ce circuit imprimé souple a par exemple une longueur de 2 mètres et une largeur de 1 ou 2 cm.

A intervalle régulier, par exemple tous les centimètres ou tous les 2cm ou tout les 5cm, on dispose un ensemble de quatre capteurs à plat sur le circuit (qui est par exemple en forme de ruban), par exemple deux accéléromètres et deux magnétomètres qui sont sensibles au champ magnétique terrestre. On peut se limiter à un seul type de capteur ou alterner les types (avec des limitations sur les performances du dispositif obtenu), ou utiliser d'autres types de capteurs.

Les capteurs sont des modèles à sortie numérique ou, au contraire, analogique.

Les informations sont collectées le long du circuit souple par un bus de type bus I2C. Elles sont recueillies par une interface I2C et envoyées vers un lien série RS ou un lien parallèle ou une interface USB ou transmises par une liaison sans fil de type Bluetooth ou WiFi. Elles arrivent enfin sur un PC où elles sont traitées selon l'un des procédés décrits ci-dessus.

Le résultat est utilisé dans un logiciel d'affichage à trois dimensions ou pour la commande d'une machine numérique.

Malgré les avantages significatifs présentés par la technique de base par rapport à l'art antérieur, cette technique ne permet pas, à elle seule, de résoudre de manière simple le problème de l'acquisition de la forme lorsque cette dernière subit des déformations qui entraînent une variation de la distance entre les capteurs. Ce cas se présente, par exemple, pour la détermination de formes du corps humain (la peau, en tant que support élastique des capteurs, suit les déformations du corps humain).

Le brevet US 6640202 divulgue un autre art antérieur connu. L'acquisition des données qui permettent de déterminer la forme d'une surface élastique s'effectue en utilisant des capteurs placés sur une structure élastique en forme de filet. Le mode de réalisation proposé utilise un positionnement radiofréquence des capteurs. Il est alors nécessaire de disposer d'une source d'alimentation significative pour alimenter autant d'émetteurs-récepteurs qu'il y a de points de mesure. Pour chaque noeud de mesure, il faut également embarquer sur l'objet dont la forme est à déterminer de l'intelligence numérique. Par ailleurs, ce système d'acquisition de données requiert la présence d'une référence. Un tel système est donc difficile à mettre en oeuvre.

D'autres techniques sont décrites dans les documents EP0968400 et JP2006153668.

L'invention ne présente pas les inconvénients de l'art antérieur.

Exposé de l'invention

La présente invention reprend l'ensemble des caractéristiques essentielles de la technique d'acquisition de base mentionnée précédemment. Les caractéristiques supplémentaires propres à la présente invention concernent les moyens mis en oeuvre pour mesurer les déformations de la matière qui dessine la forme à acquérir.

De fait, l'invention concerne un procédé et un dispositif d'acquisition d'une forme géométrique dessinée par une matière déformable, selon les définitions des revendications en annexe.

Brève description des figures

D'autres caractéristiques et avantages de l'invention apparaîtront à la lecture de modes de réalisation préférentiels fait en référence aux figures jointes parmi lesquelles (les premier et second exemples ne sont pas des modes de réalisation préférentiels de l'invention telle que revendiquée) :

- les figures 1a, 1b, 2, 3 et 4 concernant l'invention et qui ont déjà été décrites précédemment ;

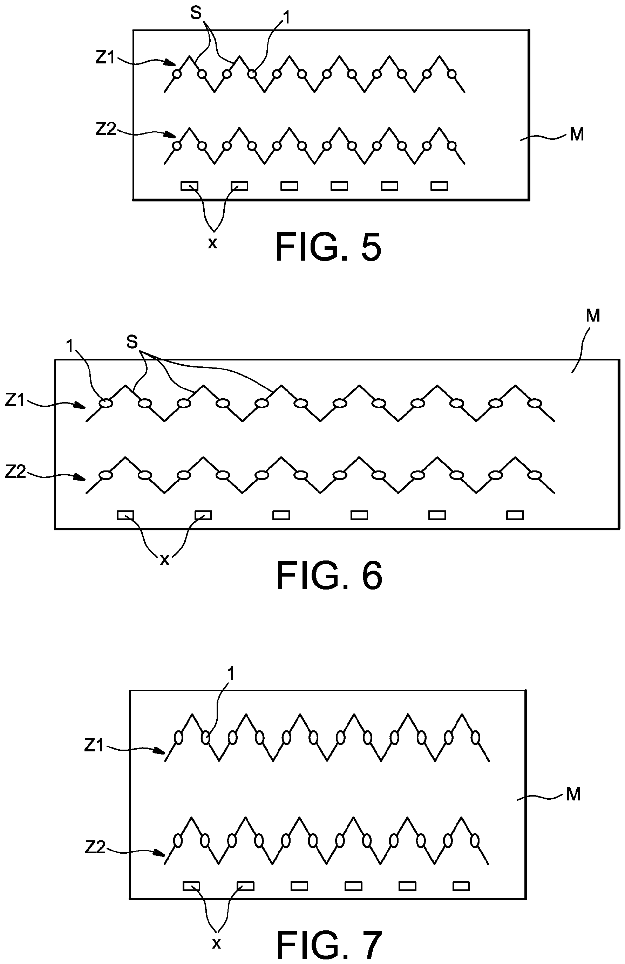

- la figure 5 représente un premier exemple non-revendiqué de structure de l'invention apte à acquérir des mesures permettant de suivre les déformations d'une forme géométrique dans le cas où la matière qui dessine la forme géométrique est au repos (pas de déformation));
- la figure 6 représente le premier exemple non-revendiqué de structure de l'invention apte à acquérir des mesures permettant de suivre les déformations d'une forme géométrique dans le cas où la matière qui dessine la forme géométrique est étirée selon une première direction (horizontalement);
- la figure 7 représente le premier exemple non-revendiqué de structure de l'invention apte à acquérir des mesures permettant de suivre les déformations d'une forme géométrique dans le cas où la matière qui dessine la forme géométrique est étirée selon une deuxième direction (verticalement);

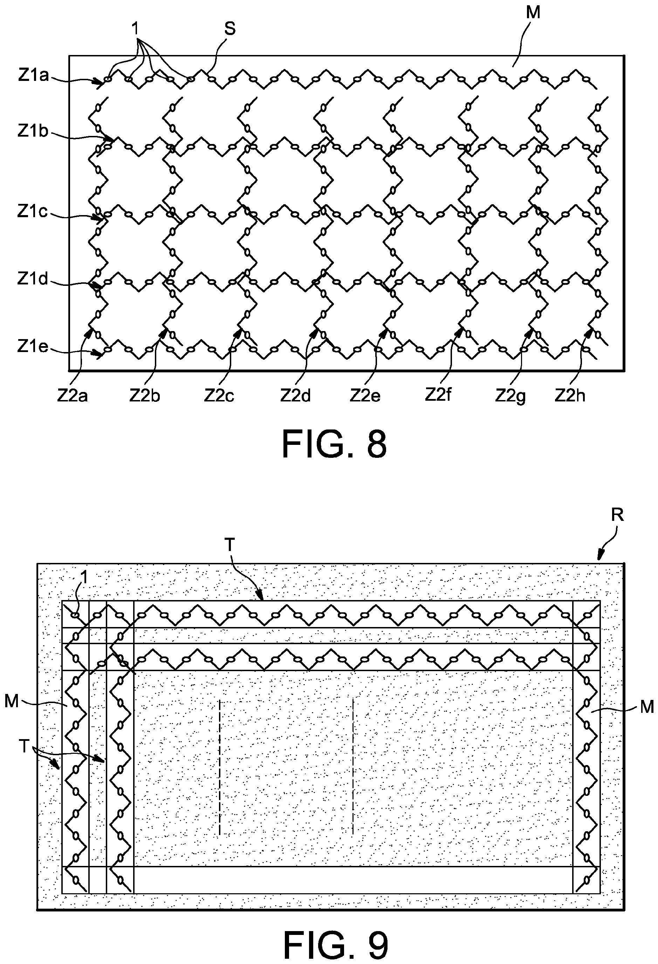

- la figure 8 représente un deuxième exemple non-revendiqué de structure de l'invention apte à acquérir des mesures permettant de suivre les déformations d'une forme géométrique ;
- la figure 9 représente un troisième exemple de structure de l'invention apte à acquérir des mesures permettant de suivre les déformations d'une forme géométrique.

Description détaillée de modes de mise en oeuvre de l'invention

La figure 5 représente un premier exemple non-revendiqué de structure de l'invention apte à acquérir des mesures permettant de suivre les déformations d'une forme géométrique dans le cas où la matière qui dessine la forme géométrique est au repos (pas de déformation)).

La structure de l'invention comprend un support M fait d'une matière solide élastique qui épouse la forme géométrique à acquérir (ici, un rectangle R), des éléments en forme de zigzag Z1, Z2 préférentiellement tissés dans le support M et des capteurs 1 fixés sur les éléments en forme de zigzag. Un élément en forme de zigzag se présente sous la forme d'une succession de segments s sur lesquels les capteurs 1 sont fixés (cousus, collés, etc.). Les segments s peuvent être, par exemple, de petits éléments rigides. Tissés dans la matière solide élastique du support M, les éléments en forme de zigzag sont aptes à suivre les déformations de la matière solide élastique du support M (cf. les déformations du zigzag des figures 6 et 7). Dans un mode de réalisation particulier, des capteurs x, dont l'utilisation sera précisée ultérieurement, sont alignés et fixés sur un côté du support élastique M. La matière déformable qui constitue le support élastique M peut être, par exemple, du caoutchouc ou un tissu souple contenant des fils de caoutchouc. De façon préférentielle, un seul capteur 1 est fixé sur un segment s d'élément en forme de zigzag. Sur l'exemple de réalisation non-revendiqué de la figure 5, les capteurs placés sur les segments successifs d'un même élément en forme de zigzag constituent un alignement. Selon d'autres modes de réalisation de l'invention, les capteurs ont une position arbitraire sur les différents segments s et ne constituent pas un alignement, la seule condition à réaliser étant alors de connaître leur position sur les différents segments. Les capteurs 1 sont cousus ou collés sur les segments 1. D'autres modes de réalisation sont également possibles pour le report des capteurs, notamment les dernières techniques connues d'insertion de petits objets miniatures au sein de tissus.

Les figures 6 et 7 représentent, respectivement, le premier exemple non-revendiqué de structure de l'invention apte à acquérir des mesures permettant de suivre les déformations d'une forme géométrique dans le cas où la matière qui dessine la forme est étirée dans une première direction (élongation horizontale sur la figure 6) et dans le cas où la matière qui dessine la forme est étirée dans une deuxième direction (élongation verticale sur la figure 7). Dans le cas de la figure 6, l'élongation de la forme R et, partant, du support M est horizontale et dans le cas de la figure 7, l'élongation de la forme R et, partant, du support M est verticale. Dans les deux cas, l'élément en forme de zigzag se déforme du fait de son aptitude à suivre les déformations du matériau élastique M. Dans le premier cas (figure 6) la forme en zigzag s'étire et dans le deuxième cas (figure 7), la forme en zigzag se resserre.

L'angle que mesure chaque capteur 1, par exemple par rapport au bord le plus long du rectangle R, varie alors avec la déformation du matériau et avec l'orientation du bord. Une lecture de cet angle, effectuée pour les différents capteurs, permet ainsi de connaître l'étirement (figure 6) ou le resserrement (figure 7) de la forme en zigzag et, partant, de déterminer la distance entre les capteurs. La détermination de la distance qui sépare les capteurs, associée aux étapes décrites ci-dessus de la technique de base concernant l'acquisition d'une forme géométrique, permettent alors avantageusement d'acquérir la forme recherchée quelles que soient les déformations de celle-ci. Les capteurs x mentionnés précédemment permettent avantageusement de simplifier les calculs de distance entre capteurs. Comme représenté sur les figures 5-7, les capteurs x suivent la déformation de la forme selon une direction unique choisie au préalable, par exemple la direction parallèle au grand côté du rectangle R. De façon préférentielle, chaque capteur x est par ailleurs placé à la verticale du point milieu qui sépare deux capteurs voisins d'un même élément en zigzag.

Avec une structure telle que celle représentée sur les figures 5-7, en cas d'étirements sensiblement égaux selon les axes horizontal et vertical, les directions mesurées par chaque capteur sont conservées. Ceci représente un inconvénient. Afin de pallier cet inconvénient, d'autres structures sont envisagées. Les figures 8 et 9 correspondent à ces autres structures.

La figure 8 représente ainsi un deuxième exemple non-revendiqué de structure de l'invention apte à acquérir des mesures permettant de suivre les déformations d'une forme géométrique. Des éléments en forme de zigzag Z1a, Z1b, Z1c, Z1d, Z1e sont tissés, selon une première direction, dans la matière solide élastique M alors que des éléments en forme de zigzag Z2a, Z2b, Z2c, Z2d, Z2f, Z2g, Z2h sont tissés, selon une deuxième direction dans la matière solide élastique M, chaque segment s d'un élément en forme de zigzag étant équipé d'un capteur 1.

La figure 9 représente un troisième exemple de structure de l'invention apte à acquérir des mesures permettant de suivre les déformations d'une forme géométrique. Le support élastique des capteurs est ici constitué de rubans T faits dans une matière élastique. Chaque ruban T est équipé d'au moins un élément en forme de zigzag muni de capteurs 1. Les rubans élastiques T sont répartis, en surface du matériau déformable ou dans le matériau déformable (rectangle R), selon deux axes principaux pouvant être perpendiculaires ou non (les axes sont perpendiculaires dans l'exemple de la figure 9). Ces rubans subissent un étirement anisotropique du fait de leur facteur de forme et les mesures des capteurs sont alors exploitables, même en cas d'élongation identique sur les deux axes.

**Revendications**

1. Procédé d'acquisition d'une forme géométrique dessinée par une matière déformable, la forme géométrique se déformant sous l'effet des déformations de la matière déformable, le procédé comprenant les étapes consistant à :

   - placer, en différents emplacements de la forme géométrique, un ensemble de capteurs (1), un capteur étant prévu pour fournir des signaux représentatifs de l'orientation de la forme géométrique à l'emplacement qui est le sien,
   - choisir un modèle de la forme,
   - à partir des signaux délivrés par les capteurs, déterminer des paramètres du modèle,
   - mesurer les distances qui séparent les capteurs les uns des autres,
   - à partir des paramètres du modèle et des mesures de distance qui séparent les capteurs les uns des autres, déterminer une répartition spatiale de points de la forme géométrique, le procédé étant **caractérisé en ce qu'**il comprend, en outre, les étapes suivantes :
   les capteurs (1) sont fixés à un support (M) fait d'une matière solide élastique qui épouse tout ou partie de la forme géométrique à acquérir et qui est apte à suivre les déformations de la matière qui dessine la forme géométrique, le support (M) étant constitué d'au moins deux rubans élastiques (T) fixés sur un matériau déformable (R) selon deux axes différents, chaque ruban élastique étant équipé d'au moins un élément en forme de zigzag (Z1, Z2) tissé dans la matière solide qui le compose, les rubans (T) étant répartis selon deux directions différentes, les capteurs (1) étant placés sur des segments (s) successifs des éléments en forme de zigzag (Z1, Z2).

2. Procédé selon la revendication 1, dans lequel les capteurs (1) placés sur les segments successifs des éléments en forme de zigzag (Z1, Z2) constituent au moins un alignement de capteurs.

3. Procédé selon la revendication 1 ou 2, dans lequel la première direction est sensiblement perpendiculaire à la deuxième direction.

4. Procédé selon l'une quelconque des revendications 1 à 3, dans lequel la forme à acquérir présente une ou plusieurs fréquences spatiales maximales et le nombre des capteurs est au moins égal, par unité de longueur ou de surface, à deux fois la valeur de la fréquence spatiale maximale, et l'on échantillonne localement la forme grâce aux capteurs.

5. Procédé selon l'une quelconque des revendications 1 à 4, dans lequel la forme géométrique est une forme qui délimite un objet déformable (2a, 2b) .

6. Procédé selon l'une quelconque des revendications 1 à 4, dans lequel la forme géométrique est une forme dessinée au sein d'un objet déformable.

**7.** Procédé selon l'une quelconque des revendications précédentes, dans lequel la forme géométrique est une courbe ou une surface.

**8.** Dispositif d'acquisition d'une forme géométrique dessinée par une matière déformable, la forme géométrique se déformant sous l'effet des déformations de la matière déformable, comprenant :

- un ensemble de capteurs (1), un capteur étant prévu pour fournir des signaux représentatifs de l'orientation de la forme géométrique à l'emplacement qui est le sien, et
- des moyens électroniques (4a) de traitement des signaux fournis par les capteurs, ces moyens étant prévus pour :

* déterminer les paramètres du modèle à partir d'un modèle de la forme géométrique,
* mesurer les distances qui séparent les capteurs les uns des autres, et
* déterminer, à partir des paramètres du modèle déterminé et des mesures de distance entre capteurs, une répartition spatiale de points de la forme géométrique,

**caractérisé en ce que** les capteurs sont fixés à un support (M) fait d'une matière solide élastique qui est configurée pour épouser tout ou partie de la forme géométrique à acquérir et qui est apte à suivre les déformations de la matière qui dessine la forme géométrique, le support (M) étant constitué d'au moins deux rubans élastiques (T) fixés sur un matériau déformable (R) selon deux axes différents, chaque ruban élastique étant équipé d'au moins un élément en forme de zigzag (Z1, Z2) tissé dans la matière solide qui le compose, les rubans (T) étant répartis selon deux directions différentes, les capteurs (1) étant placés sur des segments (s) successifs de l'élément en forme de zigzag (Z1, Z2).

**9.** Dispositif selon la revendication 8, dans lequel les capteurs (1) placés sur les segments successifs des éléments en forme de zigzag (Z1, Z2) constituent au moins un alignement de capteurs.

**10.** Dispositif selon la revendication 8 ou 9, dans lequel les deux directions différentes sont sensiblement perpendiculaires.

**11.** Dispositif selon l'une quelconque des revendications 8 à 10, dans lequel les capteurs sont choisis parmi les accéléromètres, les magnétomètres, les capteurs de force et les capteurs de pression.

**Patentansprüche**

**1.** Verfahren zum Erfassen einer aus einem verformbaren Material gebildeten geometrischen Form, wobei die geometrische Form sich unter der Wirkung der Verformungen des verformbaren Materials verformt, wobei das Verfahren die folgenden Schritte umfasst:

- Positionieren einer Anordnung von Sensoren (1) an verschiedenen Stellen der geometrischen Form, wobei ein Sensor dazu vorgesehen ist, Signale zu liefern, die für die Orientierung der geometrischen Form an der dieser zugeordneten Stelle repräsentativ sind,
- Auswählen eines Modells der Form,
- ausgehend von den von den Sensoren gelieferten Signalen Bestimmen von Parametern des Modells,
- Messen der Abstände, die die Sensoren voneinander trennen,
- ausgehend von den Parametern des Modells und den Messungen der Abstände, die die Sensoren voneinander trennen, Bestimmen einer räumlichen Verteilung von Punkten der geometrischen Form, wobei das Verfahren **dadurch gekennzeichnet ist, dass** es ferner die nachstehenden Schritte umfasst:

die Sensoren (1) werden an einen Träger (M) befestigt, der aus einem festen, elastischen Material hergestellt ist, das sich an die zu erfassende geometrische Form ganz oder teilweise anschmiegt und das dazu geeignet ist, den Verformungen des die geometrische Form bildenden Materials zu folgen, wobei der Träger (M) aus zumindest zwei elastischen Bändern (T) besteht, die an ein verformbares Material (R) in zwei verschiedenen Achsen fixiert sind, wobei jedes elastische Band mit zumindest einem zickzackförmigen Element (Z1, Z2) versehen ist, das aus dem festen Material gewebt ist, aus dem dieses besteht, wobei die Bänder (T) in zwei verschiedenen Richtungen verteilt sind, wobei die Sensoren (1) an aufeinanderfolgenden Segmenten (s) der zickzackförmigen Elemente (Z1, Z2) positioniert sind.

**2.** Verfahren nach Anspruch 1, wobei die Sensoren (1), die an den aufeinanderfolgenden Segmenten der zickzackförmigen Elemente (Z1, Z2) positioniert sind, zumindest eine fluchtende Reihe von Sensoren bilden.

**3.** Verfahren nach Anspruch 1 oder 2, wobei die erste Richtung im Wesentlichen senkrecht zur zweiten Richtung verläuft.

**4.** Verfahren nach einem der Ansprüche 1 bis 3, wobei die zu erfassende Form eine oder mehrere maximale Raumfrequenzen aufweist und die Anzahl an Sensoren zumindest pro Längen- oder Flächeneinheit gleich dem zweifachen Wert der maximalen Raumfrequenz ist, und die Form mit den Sensoren bereichsweise abgetastet wird.

**5.** Verfahren nach einem der Ansprüche 1 bis 4, wobei die geometrische Form eine Form ist, die ein verformbares Objekt (2a, 2b) begrenzt.

**6.** Verfahren nach einem der Ansprüche 1 bis 4, wobei die geometrische Form eine innerhalb eines verformbaren Objekts gebildete Form ist.

**7.** Verfahren nach einem der vorangehenden Ansprüche, wobei die geometrische Form eine Kurve oder eine Fläche ist.

**8.** Vorrichtung zum Erfassen einer aus einem verformbaren Material gebildeten geometrischen Form, wobei die geometrische Form sich unter der Wirkung der Verformungen des verformbaren Materials verformt, enthaltend:

- eine Anordnung von Sensoren (1), wobei ein Sensor dazu vorgesehen ist, Signale zu liefern, die für die Orientierung der geometrischen Form an der dieser zugeordneten Stelle repräsentativ sind,
- elektronische Einrichtungen (4a) zum Verarbeiten der von den Sensoren gelieferten Signale, wobei diese Einrichtungen dazu vorgesehen sind:

* um die Parameter des Modelles ausgehend von einem Modell der geometrischen Form zu bestimmen,
* um die Abstände zu messen, die die Sensoren voneinander trennen,
* um ausgehend von den Parametern des bestimmten Modells und den Messungen der Abstände zwischen den Sensoren eine räumliche Verteilung von Punkten der geometrischen Form zu bestimmen,

**dadurch gekennzeichnet, dass** die Sensoren (1) an einen Träger (M) befestigt sind, der aus einem festen, elastischen Material hergestellt ist, das dazu ausgelegt ist, sich an die zu erfassende geometrische Form ganz oder teilweise anzuschmiegen und das dazu geeignet ist, den Verformungen des die geometrische Form bildenden Materials zu folgen, wobei der Träger (M) aus zumindest zwei elastischen Bändern (T) besteht, die an ein verformbares Material (R) in zwei verschiedenen Achsen fixiert sind, wobei jedes elastische Band mit zumindest einem zickzackförmigen Element (Z1, Z2) versehen ist, das aus dem festen Material gewebt ist, aus dem dieses besteht,
wobei die Bänder (T) in zwei verschiedenen Richtungen verteilt sind, wobei die Sensoren (1) an aufeinanderfolgenden Segmenten (s) des zickzackförmigen Elements (Z1, Z2) positioniert sind.

**9.** Vorrichtung nach Anspruch 8, wobei die Sensoren (1), die an den aufeinanderfolgenden Segmenten der zickzackförmigen Elemente (Z1, Z2) positioniert sind, zumindest eine fluchtende Reihe von Sensoren bilden.

**10.** Vorrichtung nach Anspruch 8 oder 9, wobei die beiden verschiedenen Richtungen im Wesentlichen senkrecht verlaufen.

**11.** Vorrichtung nach einem der Ansprüche 8 bis 10, wobei die Sensoren ausgewählt sind aus Beschleunigungsmessern, Magnetometern, Kraftsensoren und Drucksensoren.

**Claims**

**1.** Acquisition process of a geometrical form defined by a deformable material, wherein the geometrical form is deformed by the deformations of the deformable material, wherein the process comprises the steps consisting of:

- placing, in different positions of the geometrical form, a set of sensors (1), wherein a sensor is provided to supply representative signals of the orientation of the geometrical form to its position,

- selecting a model of the form,
- based on the signals supplied by the sensors, determining the parameters of the model,
- measuring the distances which separate the sensors from one another,
- based on the parameters of the model and the measurements of the distance which separate the sensors from one another, determining a spatial distribution of the points of the geometrical form, wherein the process is **characterised in that** it further comprises the following steps:

the sensors (1) are fixed to a support (M) made from a solid elastic material which matches all or part of the geometrical form to be acquired and that is capable of following the deformations of the material which defines the geometrical form, wherein the support is composed of at least two elastic ribbons (T) fixed on a deformable material (R) according to two different axes, each elastic ribbon being equipped with at least one element in the form of a zigzag (Z1, Z2) woven in the solid elastic material that composes it, the ribbons being distributed in two different directions, the sensors (1) being placed on successive segments (s) of the zigzag element (Z1, Z2).

2. Process of claim 1, in which the sensors (1) placed on the successive segments of the zigzag elements (Z1, Z2) compose at least one alignment of sensors.

3. Process of claim 1 or 2, in which the first direction is substantially perpendicular to the second direction.

4. Process of any of claims 1 to 3, wherein the form to be acquired has one or more maximum spatial frequencies and the number of sensors is at least equal, per unit of length or surface, to twice the value of the maximum spatial frequency, and wherein the form is sampled locally by means of the sensors.

5. Process of any of claims 1 to 4, wherein the geometrical form is a form which sets the limits of a deformable object (2a, 2b).

6. Process of any of claims 1 to 4, wherein the geometrical form is a form defined inside a deformable object.

7. Process of any of the previous claims, wherein the geometrical form is a curve or a surface.

8. Acquisition device of a geometrical form defined by a deformable material, the geometrical form being deformed by the deformations of the deformable material, comprising:

- a set of sensors (1), wherein one sensor is provided to supply representative signals of the orientation of the geometrical form at its position, and
- electronic means (4a) for processing the signals supplied by the sensors, wherein these means are provided:

  * to determine the parameters of the model based on one model of the geometrical form,
  * to measure the distances which separate the sensors from one another, and
  * to determine, based on the parameters of the model determined and the measurements of the distances between sensors, a spatial distribution of the points of the geometrical form,

  **Characterised in that** the sensors are fixed to a support (M) made of a solid elastic material which is configured to match all or part of the geometrical form to be acquired and which is capable of following the deformations of the material which defines the geometrical form, wherein the support is is composed of at least two elastic ribbons (T) fixed on a deformable material (R) according to two different axes, each elastic ribbon being equipped with at least one element in the form of a zigzag (Z1, Z2) woven in the solid elastic material that composes it, wherein the sensors (1) are placed on successive segments (s) of the zigzag element (Z1, Z2).

9. Device of claim 8, wherein the sensors (1) placed on the successive segments of zigzag elements (Z1, Z2) form at least one alignment of sensors.

10. Device of claim 8 or 9, wherein the two different directions are substantially perpendicular.

11. Device of any of claims 8 to 10, wherein the sensors are selected from accelerometers, magnetometers, force sensors and pressure sensors.

FIG. 1A

FIG. 1B

FIG. 2

FIG. 3

FIG. 4

FIG. 5

FIG. 6

FIG. 7

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6640202 B
- EP 0968400 A
- JP 2006153668 B

**Littérature non-brevet citée dans la description**

- *Procédé et dispositif d'acquisition d'une forme géométrique*
- Procédé et dispositif d'acquisition d'une forme géométrique. *technique d'acquisition de base*